# EUROPÄISCHE PATENTSCHRIFT

(11) **EP 3 607 701 B1**
(45) Veröffentlichungstag und Bekanntmachung des Hinweises auf die Patenterteilung: **15.09.2021**
(21) Anmeldenummer: 18727163.0
(22) Anmeldetag: 07.05.2018
(51) Int. Cl.: H04L 12/24, H04L 29/08, G06F 8/61, G06F 9/4401, G06F 8/60

(54) **ZUWEISUNG VON DIGITALEN RESOURCEN INNERHALB EINES LOKALEN, MODULAREN RECHNERNETZWERKES (EDGE CLOUD)**
ALLOCATION OF DIGITAL RESOURCES WITHIN A LOCAL, MODULAR COMPUTER NETWORK (EDGE CLOUD)
ATTRIBUTION DE RESSOURCES NUMÉRIQUES DANS UN RÉSEAU INFORMATIQUE MODULAIRE LOCAL (EDGE CLOUD)

(30) Priorität: 10.05.2017 DE 102017207918; 22.08.2017 DE 102017214655
(43) Veröffentlichungstag der Anmeldung: 12.02.2020
(73) Patentinhaber: Siemens Aktiengesellschaft, 80333 München (DE)
(72) Erfinder: FRANK, Reinhard, 81369 München (DE); HUTH, Hans-Peter, 80638 München (DE); ZEIGER, Florian, 85635 Höhenkirchen-Siegertsbrunn (DE)
(86) Internationale Anmeldenummer: PCT/EP2018/061714
(87) Internationale Veröffentlichungsnummer: WO 2018/206502

(56) Entgegenhaltungen:
- US-A1- 2005 188 088
- US-A1- 2012 254 400
- KOCHAR VRINDA ET AL: "Real time resource allocation on a dynamic two level symbiotic fog architecture", 2016 SIXTH INTERNATIONAL SYMPOSIUM ON EMBEDDED COMPUTING AND SYSTEM DESIGN (ISED), IEEE, 15. Dezember 2016 (2016-12-15), Seiten 49-55, XP033117202, DOI: 10.1109/ISED.2016.7977053 [gefunden am 2017-07-12]
- Mobile Edge Computing (MEC) ETSI Industry Specification Group (ISG): "Mobile Edge Computing (MEC); Framework and Reference Architecture", , 31. März 2016 (2016-03-31), Seiten 1-16, XP055389509, Gefunden im Internet: URL:http://www.etsi.org/deliver/etsi_gs/ME C/001_099/003/01.01.01_60/gs_mec003v010101 p.pdf [gefunden am 2017-07-10]

## Beschreibung

Die vorliegende Erfindung betrifft ein Verfahren zum Zuteilen von zumindest einer digitalen Ressource eines lokalen, modularen Rechnernetzwerkes, welches wenigstens zwei Rechenmodule aufweist, denen jeweils ein Ressourcenwert für eine digitale Ressource zugeordnet ist, in Abhängigkeit von einem Datensatz, der eine Ressourcenanfrage mit einem Bedarfswert aufweist, mittels einer Steuereinheit.

In der Presse sowie im Internet erfährt der Begriff "Industrial Edge-Cloud" zunehmend an Bedeutung. Der Begriff Industrial Edge-Cloud wird im Rahmen der vorliegenden Anmeldung als ein lokales, modulares Rechnernetzwerk bezeichnet. Allerdings ist dieser Begriff nicht klar definiert. Die unterschiedlichen Beschreibungen zu dem lokalen, modularen Rechnernetzwerk haben gemein, dass dies Teil eines Rechnernetzwerkes ist, welches nahe am Benutzer angeordnet ist. Bestimmte Services können vor Ort vorgehalten werden und das lokale, modulare Rechnernetzwerk kann eine bessere Leistung hinsichtlich der Datenverarbeitung bereitstellen. Dieses lokale, modulare Rechnernetzwerk kann einen beschränkten Zugang zu Sensoren und Aktuatoren bereitstellen und bei Sicherheitskonzepten miteinbezogen werden. Ein lokales, modulares Rechnernetzwerk wird in der Regel industriell beziehungsweise gewerblich eingesetzt.

In einem solchen Netzwerk können bestimmte Dienste definierten Personengruppen zugewiesen werden. So können zum Beispiel nur Mitarbeiter einer Logistikabteilung auf eine Lageüberwachung zugreifen, welche das lokale, modulare Rechnernetzwerk beinhalten kann. Im Normalfall ist ein lokales, modulares Rechnernetzwerk auf einem Server eingerichtet, der in der Nähe von den Kontrollprozessen und den dazugehörigen Geräten angeordnet ist. So kann zum Beispiel in einer Werkhalle ein 3D-Drucker angeordnet sein und in einer näheren Umgebung des 3D-Druckers könnte beispielsweise ein dazugehöriges lokales, modulares Rechnernetzwerk angeordnet sein. Eine Abgrenzung von lokalen, modularen Rechnernetzwerken hinsichtlich ihrer Größe beziehungsweise räumlichen Ausdehnung ist relativ schwierig. Ein lokales Netzwerk ist ein Netz, welches in der Regel innerhalb einer abgegrenzten Region verschiedene Geräte verbindet. In diesem Kontext sind mit dem Begriff "Geräte" Rechenmodule gemeint. Dabei arbeitet das Netz häufig ohne IP Routing, beispielsweise nur mit Ethernet. Das lokale Netz ist durch die Anzahl der daran angeschlossenen Geräte begrenzt. Zwar gibt es keinen allgemein anerkannten Grenzwert für die Abgrenzung eines lokalen Netzes. Im industriellen Kontext kommen sind häufig wenige hundert Rechenmodule an ein lokales Netzwerk angeschlossen. Diese Geräte sind oft lokal angeordnet, wodurch sich ebenfalls eine räumliche Begrenzung ergeben kann. Oft ist ein lokales Netzwerk auf ein Firmengelände oder einen Bürokomplex beschränkt.

So kann beispielsweise die IT-Infrastruktur auf einem Firmengelände zu einem lokalen, modularen Rechnernetzwerk zusammengefasst sein. Bei größeren Firmen kann ein solches Firmengelände durchaus eine Ausdehnung von wenigen Kilometern erreichen. Ein lokales, modulares Rechnernetzwerk kann sich jedoch nicht über mehrere Kontinente erstrecken. Zwar könnte eine Firma eine Niederlassung in Rom und eine weitere Niederlassung in Tokio haben, jedoch würde das lokale, modulare Rechnernetzwerk sich auf jeweils einen Standort beschränken. Zwar mag eine Verbindung von zwei lokalen modularen Rechnernetzwerken möglich sein, dies bedeutet jedoch nicht, dass daraus eine einzige Edge-Cloud hervorgeht.

Die bisher eingesetzten lokalen Netzwerke setzen zur Realisierung homogene Rechenmodule ein. Homogene Rechenmodule sind untereinander ähnlich und weisen Übereinstimmungen bei einer oder mehreren charakterisierenden Eigenschaften auf. Oft werden solche Netzwerke als Komplettpaket von einem Anbieter vertrieben, was zum Beispiel dazu führt, dass alle Rechenmodule dasselbe Betriebssystem aufweisen können. Im Gegensatz dazu ermöglicht die vorliegende Anmeldung auch die Bildung eines lokalen, modularen Rechnernetzwerkes, welches heterogene Komponenten aufweisen kann. Darüber hinaus ist ein Rechnernetzwerk gemäß dieser Anmeldung deutlich flexibler anpassbar als ein stationäres Rechnernetzwerk. Zudem treten bei bisherigen Edge-Cloud-Lösungen einige Defizite auf.

Die Druckschrift US 2005/0188088 A1 beschreibt ein Verfahren, ansteigende Ressourcenanforderungen einer Anfrage in einem Netzwerk zu verwalten. Dazu können die Ressourcen in diskrete Einheiten unterteilt werden, welche eine Hierarchie aufweisen. Eine Leistungsfähigkeit einer ersten Auswahl von Ressourcen wird mit einer benötigten Leistungsfähigkeit für die Anfrage verglichen. Wenn die Leistungsfähigkeit nicht ausreicht, werden die diskreten Ressourcen ersucht, um die Leistungsfähigkeit zu erreichen.

Der Artikel "Real Time Resource Allocation on a Dynamic Two Level Symbiotic Fog Architecture" von Vrinda Kochar et al. aus der Zeitschrift "Sixth International Symposium on Embedded Computing and System Design" (ISED) aus dem Jahr 2016 beschreibt einen Ansatz des so genannten "fog computing", womit lokale Geräte anstelle einer Cloud benutzt werden können. Diese "edge devices" können diesem Zuteilungssystem dynamisch hinzutreten und nach einer Erfüllung ihrer Rechenaufgabe das Zuteilungssystem wieder verlassen. Dieser Artikel beschreibt, wie ein Zeitplan erstellt werden kann, durch den festgelegt wird, welches Gerät welche Aufgabe wann ausführen soll.

Die Broschüre "Mobile Edge Computing (MEC); Framework and Reference Architecture" beschreibt eine mobile Edge Architektur, welche es ermöglichen soll, Applikationen effizient und nahtlos auszuführen. Dieser Artikel beschreibt funktionale Elemente und Referenzpunkte zwischen diesen Elementen sowie eine Anzahl von mobilen Edge Diensten, welche diese Lösung beinhalten.

Die Druckschrift US 2012/0254400 A1 beschreibt ein Verfahren zum Betreiben eines Rechenzentrums. Dazu werden Komponenten überwacht, um individuelle heterogene Betriebsparameter von Computing Clouds innerhalb des Rechenzentrums zu erfassen. Diese Druckschrift beinhaltet einen dedizierten Controller, welcher die individuellen heterogenen Computing Clouds reguliert und das Klima des Rechenzentrums kontrolliert. Dies erfolgt in Abhängigkeit von den überwachten Komponenten, um die Leistungsfähigkeit des Rechenzentrums zu verbessern.

Unterschiedliche Anwendungsfälle oder verschiedene Einsatzorte bedürfen eines noch flexibleren Konzeptes mit der Fähigkeit, sich zumindest teilweise den Anforderungen anzupassen. Bei einem stationären Rechnernetzwerk ist dies erstmals nicht gegeben. Anwendungsfälle, welche temporär auftreten, können eine temporäre Installation oder dynamische Infrastrukturen benötigen. Daher ist ein hohes Maß an Nutzerfreundlichkeit, im Idealfall ein installationsloser Einsatz von Software und weiteren Komponenten sinnvoll. Nötige Anpassungen am lokalen, modularen Rechnernetzwerk sollten im Idealfall auch von einem Laien und nicht nur von Netzwerk-Experten möglich sein. Es sind einige Szenarien vorstellbar, bei denen eine Offline-Ausführung erwünscht ist. Auch in diesen Fällen sollten bestimmte Rechenmodule, die Teil des lokalen, modularen Rechnernetzwerkes sind, ihre Arbeit fortsetzen können. Die Arbeit der Rechenmodule soll also nicht von einer Onlineverbindung abhängig sein. In vielen Fällen teilen sich mehrere Teilnehmer ein Netzwerk und die dazugehörige IT-Infrastruktur. Diese Teilnehmer können Menschen, aber auch die Rechenmodule als Teil des lokalen, modularen Rechnernetzwerkes sein. Bestimmte Anforderungen bedürfen einer erhöhten Rechenkapazität. Das lokale, modulare Rechnernetzwerk sollte derart flexibel ausgestaltet sein, um auf rechenintensive Anfragen adäquat reagieren zu können. Hinsichtlich der Flexibilität kann es auch richtig sein, dass das lokale, modulare Rechnernetzwerk auch Geräte und Software unterschiedlicher Hersteller unterstützt. Die vorgenannten Defizite zeigen, dass gegenwärtig vorhandene lokale, modulare Rechnernetzwerke nicht oder nur unzureichend auf verschiedene Anwendungsfälle beziehungsweise Anforderungen reagieren können. Daher stellt sich der Anmelderin die Aufgabe, ein lokales, modulares Rechnernetzwerk bereitzustellen, das flexibel auf unterschiedliche Anforderungen reagieren kann. Dabei liegt der Fokus nicht auf der Herstellung eines lokalen, modularen Rechnernetzwerkes, sondern auf der Anpassbarkeit und Flexibilität bestehender Netzwerke, welche heterogene Komponenten beziehungsweise Rechenmodule aufweisen. Ein solches System von heterogenen Rechenmodulen sollen mithilfe dieser vorliegenden Erfindung den Anforderungen optimal angepasst werden.

Diese Aufgabe wird durch die vorliegende Erfindung gemäß Patentanspruch 1 gelöst. Vorteilhafte Weiterbildungen dieser Erfindung ergeben sich aus den Unteransprüchen. Es wird auch eine Vorrichtung zur Lösung dieser Aufgabe bereitgestellt. Diese Vorrichtung weist ebenfalls vorteilhafte Weiterbildungen auf.

Die vorliegende Erfindung beschreibt ein Verfahren zum Zuteilen von zumindest einer digitalen Ressource eines lokalen, modularen Rechnernetzwerkes, welches wenigstens zwei Rechenmodule aufweist, denen jeweils ein Ressourcenwert für eine digitale Ressource zugeordnet ist, in Abhängigkeit von einem Eingabedatensatz, der eine Ressourcenanfrage mit einem Bedarfswert aufweist, mittels einer Steuereinheit, die folgende Verfahrensschritte ausführt. Zunächst greift die Steuereinheit auf den Eingabedatensatz zu und liest den Eingabedatensatz ein. Die Steuereinheit ruft von jedem Rechenmodul, das Teil des lokalen, modularen Rechnernetzwerkes ist, den Ressourcenwert ab, wobei der Ressourcenwert einen verfügbaren Anteil der digitalen Ressource des jeweiligen Rechenmoduls repräsentiert. Die Steuereinheit vergleicht den Bedarfswert mit zumindest einem der abgerufenen Ressourcenwerte. In Abhängigkeit von einem Ergebnis des Vergleichens teilt die Steuereinheit zumindest einer der digitalen Ressourcen zu der Anfrage zu. In einem weiteren Schritt wird ein mobiles Rechenmodul automatisch in das lokale, modulare Rechnernetzwerk integriert, falls das Rechenmodul in einen Raumbereich eintritt. Das mobile Rechenmodul wird automatisch entlassen, falls das Rechenmodul den Raumbereich verlässt. Nachdem das mobile Rechenmodul in das lokale, modulare Rechennetzwerk automatisch integriert oder entlassen wurde, wird das geänderte lokale, modulare Rechnernetzwerk bei der Zuteilung der digitalen Ressourcen berücksichtigt.

Die jeweiligen Rechenmodule können individuelle Funktionen aufweisen beziehungsweise erfüllen. Die jeweiligen Rechenmodule sind vorzugsweise innerhalb eines Arbeitsbereichs angeordnet, um ihre jeweiligen zugewiesenen Aufgaben zu erfüllen. Der Begriff Arbeitsbereich kann in diesem Zusammenhang zwei Bedeutungen haben. Zum einen kann der Arbeitsbereich räumlich begrenzt sein, das heißt ein Rechenmodul kann beispielsweise einer bestimmten Werkhalle oder einem Zimmer zugeordnet sein. Zum anderen kann der Arbeitsbereich sich auf eine bestimmte Aufgabe beziehungsweise eine Funktion beziehen. Ein Rechenmodul kann bestimmten Funktionen fest zugewiesen worden sein. Es ist jedoch auch möglich, dass einem Rechenmodul neue Funktionen zugewiesen werden. Im Normalfall werden die Rechenmodule getrennt voneinander ausgeführt. Das heißt insbesondere, dass zwischen Rechenmodulen in der Regel keine Kommunikation vorgesehen ist. Somit können unterschiedliche Rechenmodule sich nicht gegenseitig beeinflussen. Ein Arbeitsbereich eines Rechenmoduls kann weitere Funktionen beziehungsweise Komponenten aufweisen, welche für das jeweilige Rechenmodul in dem jeweiligen Arbeitsbereich zur Verfügung gestellt werden. Zu diesen Komponenten oder Funktionen können beispielsweise Sensoren, Aktuatoren, Schnittstellen zu industriellen Protokollen (englisch: industrial protocol daemons), oder verschiedene Softwareanwendungen gehören.

Unter dem Begriff der digitalen Ressource beziehungsweise der digitalen Ressourcen sind insbesondere Speicherkapazität, Rechenkapazität, Rechenleistung, sowie Kapazitäten für die Kommunikation zu verstehen. Diese digitalen Ressourcen werden durch die Verfahrensschritte in einem lokalen, modularen Rechnernetzwerk erfasst und gemäß der Ressourcenanfrage innerhalb des lokalen, modularen Rechnernetzwerkes verteilt. Insbesondere beschreiben die Verfahrensschritte wie sehr unterschiedliche Ressourcen, z.B. die Rechenleistung eines Servers und die eines kleinen industriellen Steuergerätes als einheitlich verwalteter Ressourcenpool gestaltet werden können. Dabei geht es nicht darum, ein lokales, modulares Rechnernetzwerk durch Bereitstellen von neuen Rechenmodulen, beispielsweise von PCs, neu zu erzeugen oder zu ergänzen.

Vielmehr geht es darum, bereits vorhandene Rechenmodule und deren Ressourcenwerte zu erfassen. Diese Ressourcenwerte werden mit dem Bedarfswert, der die Ressourcenanfrage repräsentiert, mit dem jeweiligen Ressourcenwerte der Rechenmodule verglichen. Anhand unterschiedlicher Ressourcenanfragen kann sich demnach die Zuordnung der digitalen Ressourcen innerhalb des lokalen, modularen Rechnernetzwerkes ändern. Diese Änderungen können flexibel ausgestaltet werden und somit ist es möglich, ein intelligentes lokales, modulares Rechnernetzwerk bereitzustellen. Wird beispielsweise eine äußerst rechenintensive Datenverarbeitung gestartet, so würde das erfindungsgemäße Verfahren die Aufgabe nicht zwangsweise auf dem Rechenmodul durchführen, bei dem die Ressourcenanfrage getätigt worden ist. Es würden die digitalen Ressourcen innerhalb des lokalen, modularen Rechnernetzwerkes ermittelt und mit dem Bedarfswert, in diesem Fall die rechenintensive Datenauswertung, verglichen werden. Dieser Vergleich könnte zum Beispiel zu dem Ergebnis kommen, dass ein anderes Rechenmodul innerhalb des lokalen, modularen Rechnernetzwerkes verfügbar ist, welches mehr Rechenleistung für diese Aufgabe bereitstellen kann. Der Bedarfswert der Ressourcenanfrage könnte in diesem Beispiel eine Zeitvorgabe sein, innerhalb derer die rechenintensive Datenauswertung erfolgen soll. In diesem Fall würden die digitalen Ressourcenwerte in Zeitwerte umgewandelt, welche daraufhin mit dem Bedarfswert verglichen werden können. In diesem Beispiel ergäben sich für die unterschiedlichen Rechenmodule verschiedene Zeitwerte, welche die Rechenmodule benötigen würden, um die Anforderung erfüllen zu können. Ein Vergleich mit dem Bedarfswert, in diesem Fall eine Zeitvorgabe, würde aufzeigen, welche Rechenmodule innerhalb des lokalen, modularen Rechnernetzwerkes diese Aufgabe in der vorgegebenen Zeit erfüllen können. Dies kann eventuell ein anderes Rechenmodul sein, bei dem die Anfrage getätigt wurde. Das erfindungsgemäße Verfahren ist dabei nicht auf die jeweiligen Rechenmodule insofern beschränkt, dass die Rechenmodule für sich einzeln geprüft werden. Es ist auch möglich, die Ressourcenanfrage aufzuteilen und unterschiedliche oder mehrere Rechenmodule zur Erfüllung der Aufgabe heranzuziehen. In einem solchen Fall würde sich ein komplexerer Vergleichsalgorithmus ergeben als in dem vorgenannten einfacheren Beispiel.

Damit ist es möglich, ein lokales, modulares Rechnernetzwerk aus vorhandenen Rechenmodulen zu generieren, welches sich automatisch in Abhängigkeit von der Ressourcenanfrage nach oben beziehungsweise nach unten skalieren kann. Das heißt, wenn sich innerhalb eines solchen Netzwerkes eine neue zusätzliche Aufgabe ergibt, welche zusätzliche digitale Ressourcen benötigt, so kann das lokale, modulare Rechnernetzwerk flexibel darauf eingestellt werden oder darauf reagieren. Dies kann anhand eines komplexeren Vergleichsalgorithmus bewerkstelligt werden.

In einer vorteilhaften weiteren Ausführungsform der vorliegenden Erfindung ist vorgesehen, dass die einzelnen Verfahrensschritte in einer digitalen Abbilddatei gespeichert sind und das Verfahren nach einer Aktivierung der Abbilddatei durch die Steuereinheit automatisch ausgeführt wird. Diese Abbilddatei kann eine binäre Datei oder ein komprimiertes Archiv sein, welche die erforderlichen Informationen beinhalten. In der Abbilddatei können Grundfunktionen hinterlegt sein, die für mehrere Dienste notwendig sind, wie zum Beispiel eine Authentifizierungsfunktion bezüglich der jeweiligen Rechenmodule.

Diese Abbilddatei kann auf üblichen Computern mit dazugehörigen Betriebssystemen als ausführbare Bootdatei gestartet werden. Das heißt die Abbilddatei kann als sogenanntes ISO-Image ausgeführt sein. Kommt eine Abbilddatei zum Einsatz, so setzt die Steuereinheit diese Abbilddatei ein. Die Steuereinheit kann auch als Kontrolleinheit betrachtet werden. Die Steuereinheit hat Informationen über alle Rechenmodule inklusive deren Fähigkeiten, insbesondere deren digitalen Ressourcen. Mithilfe der Steuereinheit kann eine Netzwerkstruktur und deren einzelnen Fähigkeiten ermittelt werden. Das heißt die Steuereinheit kann die jeweiligen Rechenmodule detektieren und somit die Struktur des lokalen, modularen Rechnernetzwerkes erfassen. Durch das Ausführen der Abbilddatei kann die Steuereinheit das erfindungsgemäße Verfahren in Gang setzen. In der Abbilddatei können unterschiedliche Vergleichs- beziehungsweise Zuordnungsalgorithmen hinterlegt sein. Diese Algorithmen können das Zuteilen von den digitalen Ressourcen in Abhängigkeit von dem Bedarfswert beeinflussen. Die Zuteilungs- beziehungsweise Vergleichsalgorithmen können dabei mehr oder weniger komplex ausgestaltet sein.

In einer weiteren Variante der vorliegenden Erfindung ist vorgesehen, dass die Abbilddatei außerhalb des lokalen, modularen Rechnernetzwerkes ohne Verwendung der Steuereinheit erstellt wird. Um die in der Abbilddatei hinterlegten Algorithmen zu modifizieren oder zu verbessern, ist es daher nicht notwendig, die Steuereinheit zu verwenden. Zwar bedarf es der Steuereinheit, um letztendlich das Verfahren in Gang zu setzen, jedoch kann die Abbilddatei (englisch: image), welche das erfindungsgemäße Verfahren bereithält, auch auf einem anderen Rechenmodul oder einem anderen Computer verändert werden. Damit ist es möglich, den Prozess des Zuteilens von digitalen Ressourcen innerhalb des lokalen, modularen Rechnernetzwerkes auch außerhalb des Rechnernetzwerkes zu beeinflussen. So könnte beispielsweise eine Softwarefirma beauftragt werden, die Abbilddatei zu modifizieren beziehungsweise zu verbessern.

In einer weiteren Ausführungsform der vorliegenden Erfindung ist ein Verfahren vorgesehen, wobei die erstellte Abbilddatei der Steuereinheit zur Verfügung gestellt wird und die Abbilddatei innerhalb des lokalen, modularen Rechnernetzwerkes ausgeführt wird. Wurde, wie im vorigen Absatz beschrieben, die Abbilddatei extern modifiziert, so kann die veränderte Abbilddatei der Steuereinheit übermittelt werden, welche bei einer Ausführung des Verfahrens die neue Abbilddatei berücksichtigen kann. Dabei kann die Abbilddatei der Steuereinheit auf unterschiedliche Art und Weise zur Verfügung gestellt werden. Denkbar wäre ein Datentransfer mittels eines Datenträgers (zum Beispiel CD-ROM, USB-Stick) oder die Steuereinheit könnte über einen weiteren PC, der nicht Teil des Rechnernetzwerkes sein muss, ferngesteuert werden. Eine solche Fernsteuerung wird oft auch als Remote-Steuerung bezeichnet. Je nach Bedarf beziehungsweise Sicherheitsvorschriften kann der Remotezugriff auf die Steuereinheit möglich oder ausgeschlossen sein.

Auch ist es möglich, dass die Steuereinheit auf ein weiteres Rechenmodul, welches nicht Teil des modularen, lokalen Rechnernetzwerkes sein muss, zugreift. Auf diesem weiteren Rechenmodul, beispielsweise einem PC, kann eine Abbilddatei gespeichert sein, auf die die Steuereinheit zugreift und dann innerhalb des lokalen, modularen Rechnernetzwerkes ausführt. Damit ist es möglich, über eine Remoteverbindung Dienste bei Bedarf in das modulare, lokale Rechnernetzwerk zu integrieren und darin auszuführen. Das lokale, modulare Rechnernetzwerk kann zunächst mit einem Minimum von Diensten gestartet werden und erst bei Bedarf weitere Dienste über zusätzliche Abbilddateien in das Rechnernetzwerk integrieren. Dies kann so ausgestaltet sein, dass eine Integration von zusätzlichen Abbilddateien während des Betriebs möglich ist. Zum Implementieren der Abbilddateien beziehungsweise der dazugehörigen Dienste kann das Konzept der OpenStack Software oder skriptbasierten SSH- oder FTP-Dienste zum Einsatz kommen. In diesem Fall wäre die OpenStack Software das Werkzeug, welches die Abbilddatei dem lokalen, modularen Rechnernetzwerk zur Verfügung stellt.

In einer weiteren Variante der vorliegenden Erfindung ist vorgesehen, dass die Rechenmodule von der Steuereinheit einzeln angesteuert werden und zwischen den Rechenmodulen keine Signale, welche die verfügbaren Anteile der digitalen Ressourcen betreffen, ausgetauscht werden. In vielen Fällen ist vorgesehen, dass innerhalb des lokalen, modularen Rechnernetzwerkes die jeweiligen Rechenmodule untereinander keine Signale austauschen können. In dieser Variante der Erfindung können die Rechenmodule separat einzeln angesteuert werden. So kann vermieden werden, dass die Rechenmodule sich gegenseitig negativ beeinflussen. Erhält beispielsweise ein Roboter, der ein Rechenmodul darstellen kann, ein Aktivierungssignal, so kann dieser Roboter das Aktivierungssignal nicht an weitere Rechenmodule weiterreichen. Vorzugsweise ist für das Ansteuern der Rechenmodule eine Kommunikationsverbindung zu der Steuereinheit eingerichtet. Die jeweiligen Rechenmodule können in dieser Ausführungsform jeweils eine Kommunikationsverbindung zu der Steuereinheit haben, jedoch werden unter den jeweiligen Rechenmodulen keine Signale ausgetauscht.

In einer vorteilhaften weiteren Ausführungsform der vorliegenden Erfindung ist vorgesehen, dass die Steuereinheit das Verfahren nach einem bereitgestellten Regelwerk ausführt, welches insbesondere einen Zeitplan für das Ausführen der Verfahrensschritte a) bis d) umfasst. So kann beispielsweise vorgesehen sein, dass das lokale, modulare Rechnernetzwerk zu bestimmten Zeiten in einen sogenannten Standby-Modus geschaltet wird. Ein solcher Zeitraum könnte zum Beispiel der Zeitraum eines Betriebsurlaubs sein. Auch kann vorgesehen sein, zu bestimmten Zeiten gewisse digitale Ressourcen bereitzuhalten, um eventuelle Arbeitsspitzen, welche mehr digitale Ressourcen benötigen als sonst, abzufangen. Das Regelwerk kann einen Zeitplan beschreiben, jedoch sind auch andere Regelwerke vorstellbar. So kann das Ausführen des Verfahrens durch die Steuereinheit auch von nicht-zeitlichen Parametern abhängig sein.

Die vorliegende Erfindung stellt auch eine Vorrichtung zur Zuteilung von digitalen Ressourcen eines lokalen, modularen Rechnernetzwerkes, welches wenigstens zwei Rechenmodule aufweist, denen jeweils ein Ressourcenwert für eine digitale Ressource zugeordnet ist, in Abhängigkeit von einem Eingabedatensatz, der eine Ressourcenanfrage mit einem Bedarfswert aufweist, mittels einer Steuereinheit bereit. Die Steuereinheit ist dabei derart ausgestaltet, auf den Eingabedatensatz zuzugreifen und den Eingabedatensatz auszulesen. Die Vorrichtung zeichnet sich dadurch aus, dass die Steuereinheit ausgestaltet ist, von jedem Rechenmodul, das Teil des lokalen, modularen Rechnernetzwerkes ist, den Ressourcenwert abzurufen, wobei der Ressourcenwert einen verfügbaren Anteil der digitalen Ressource des jeweiligen Rechenmoduls repräsentiert. Die Steuereinheit ist ferner ausgestaltet, den Bedarfswert mit zumindest einem der abgerufenen Ressourcenwerte zu vergleichen und zumindest einer der digitalen Ressourcen zu der Anfrage in Abhängigkeit von einem Ergebnis des Vergleichens zuzuteilen. Die Vorteile, welche im Zusammenhang mit Patentanspruch 1 genannt wurden, gelten sinngemäß auch für diesen dazugehörigen Vorrichtungsanspruch.

Eine vorteilhafte Variante der Erfindung sieht vor, dass wobei die wenigstens zwei Rechenmodule ein heterogenes Rechnernetzwerk bilden. Ein heterogenes Rechnernetzwerk weist mehrere Rechenmodule auf, welche sich in wenigstens einer charakterisierenden Eigenschaft unterscheiden. Die heterogenen Rechenmodule können sich insbesondere aus ungleichen Einheiten zusammensetzen. So kann zum Beispiel ein Rechenmodul als Desktop-PC und ein anderes Rechenmodul als Roboter ausgebildet sein. Die unterschiedlichen Rechenmodule können ein lokales Rechnernetzwerk bilden. Die Rechenmodule können unterschiedliche Übertragungsmethoden aufweisen oder topologisch anders aufgebaut sein. So kann eine Übertragungsmethode eine verschlüsselte Datenübertragung vorsehen, eine andere Datenübertragung kann sich nur auf eine Umgebung von wenigen Metern um das Rechenmodul beschränken (z.B. Bluetooth) oder die Übertragungsart kann eine Datenübertragung zwischen Rechenmodulen vorsehen, die voneinander über 10 Meter entfernt sind. Auch eine Datenübertragung mittels einer Satellitenkommuniaktion zu noch weiter entfernten Rechenmodulen ist denkbar.

Übertragungsmedien innerhalb eines Rechenmoduls können sich von denen eines anderen Rechenmoduls unterscheiden. So kann ein Rechenmodul beispielsweise Koaxialkabel und ein anderes TP-twisted-pair Kabeln als Übertragungsmedien aufweisen. Solche Übertragungsmedien können verschiedene Rechenmodule physikalisch verbinden, es können demnach z.B. zwei Rechenmodule miteinander durch ein Kabel verbunden sein. Kommen mehrere Kabelverbindungen zum Einsatz, so kann die Art des Kabels unterschiedlich sein. Auch unterschiedliche Betriebssysteme für die jeweiligen Rechenmodule sind möglich. Bezüglich der Topologie können heterogene lokale Netzwerke in Bus-, Stern- oder Ringtopologie aufgebaut sein. Weitere Aspekte des heterogenen Netzwerks können mittels unterschiedlicher Netzkonfiguration oder Zugangsverfahren der Rechenmodule verwirklicht sein.

Somit gibt es viele Möglichkeiten, wie die Rechenmodule ein heterogenes Rechnernetzwerk bilden können. Durch ihre unterschiedlichen charakterisierenden Eigenschaften können diese Rechenmodule einen heterogenen Pool von digitalen Ressourcen bilden. Dies wird oft als heterogener Ressourcenpool bezeichnet. Dieser Ressourcenpool kann daher unterschiedliche digitale Ressourcen aufweisen. In der Regel handelt es sich nicht um eine einheitliche Ressource, die immer gleich oder ähnlich ausgestaltet ist, zum Beispiel ein Server-Rack, sondern bevorzugt bilden verschiede Geräte, die Rechenmodule, ein heterogenes Netzwerk mit jeweils speziellen Fähigkeiten. Wenn deren digitale Ressourcen unterschiedlich sind, weist das heterogene Rechnernetzwerk ebenfalls einen heterogenen Ressourcenpool auf.

Insbesondere kann das lokale, modulare Rechnernetzwerk als heterogenes Netzwerk ausgebildet sein. Beispielsweise gibt es Rechenmodule, welche eine bestimmte Art der Kommunikation als digitale Ressource unterstützen, zum Beispiel ProfiNet. Andere Rechenmodule können in Echtzeit Berechnungen ausführen, sie können also "Real-Time-fähig" sein, und somit die in der Automatisierung notwendigen Berechnungen unter Echtzeitbedingungen eingesetzt werden. Solche Rechenmodule können als digitale Ressource Rechenleistung anbieten. Weitere Rechenmodule können als digitale Ressource Speicherkapazität bereithalten. Andere Geräte als Rechenmodule sind für Datenbankabfragen sehr gut geeignet. Oder es kann ein Rechenmodul innerhalb des heterogenen Netzwerkes geben, wobei das Rechenmodul als Gateway zwischen Kommunikationstechnologien dient (z.B. Gateway zwischen iWLAN (industrial wireless local area network - Weiterentwicklung des WLAN zur zeitgenauen Übertragung von Datensätzen), Ethernet, Satellitenkommunikation, etc.).

Die Erfindung sieht vor, dass die Steuereinheit ausgestaltet ist, ein mobiles Rechenmodul in das lokale, modulare Rechnernetzwerk automatisch zu integrieren, falls das Rechenmodul in einen Raumbereich eintritt und zu entlassen, falls das Rechenmodul den Raumbereich verlässt, und nachdem das mobile Rechenmodul in das lokale, modulare Rechennetzwerk automatisch integriert oder entlassen wurde, das geänderte lokale, modulare Rechnernetzwerk bei der Zuteilung der digitalen Ressourcen zu berücksichtigen.

Ein mobiles Rechenmodul kann zum Beispiel ein beweglicher Roboter sein. Auch Smartphones, welche von Menschen von einem Raumbereich in einen anderen Raumbereich transportiert werden, können als mobile Rechenmodule angesehen werden. Ebenfalls kann ein größeres Rechenmodul, wie zum Beispiel ein Schiff, als mobiles Rechenmodul eingestuft werden. Da mobile Rechenmodule beweglich sind, können diese den Einflussbereich des lokalen, modularen Rechnernetzwerkes verlassen beziehungsweise in diesen Bereich eintreten.

Das heißt in dieser Variante ist das lokale, modulare Rechnernetzwerk hinsichtlich der Art und der Anzahl der jeweiligen Rechenmodule nicht stationär festgelegt. Umfasst beispielsweise das lokale, modulare Rechnernetzwerk einen Teil eines Hafens, so stellt ein einfahrendes Schiff ein mobiles Rechenmodul dar. Dieses mobile Rechenmodul, in diesem Fall das Schiff, würde durch das Einfahren in den Hafen in den Einflussbereich des lokalen, modularen Rechnernetzwerkes gelangen. Die Steuereinheit des lokalen, modularen Rechnernetzwerkes könnte dieses Schiff registrieren und deren jeweiligen Rechenmodule in das modulare, lokale Rechnernetzwerk integrieren. Damit würden sich die digitalen Ressourcen erhöhen, was bei der Zuteilung der digitalen Ressourcen von Bedeutung sein kann. Besitzt das Schiff beispielsweise viele leistungsstarke Computer, so können rechenintensive Aufgaben temporär auf das Schiff ausgelagert werden. Wenn das mobile Rechenmodul den Einflussbereich des lokalen, modularen Rechnernetzwerkes wieder verlässt, wird es durch die Steuereinheit aus dem Rechnernetzwerk ausgeloggt und daraus entlassen. In dieser Variante der vorliegenden Erfindung können das lokale, modulare Rechnernetzwerk hinsichtlich seiner Rechenmodule und deren Kapazitäten schwanken. Vereinfacht gesagt, kann in dieser Variante der Erfindung das lokale, modulare Rechnernetzwerk "atmend" ausgeführt sein.

In einer weiteren Variante der Erfindung ist vorgesehen, dass mehrere Rechenmodule in einem Raumbereich angeordnet sind, der dem lokalen, modularen Rechnernetzwerk zugeordnet ist. Ein solcher Raumbereich kann zum Beispiel eine Werkhalle sein. Darin können sich mehrere Rechenmodule, beispielsweise Roboter, aufhalten. Damit ist es möglich, das lokale, modulare Rechnernetzwerk in unterschiedliche Raumbereiche aufzuteilen und die jeweiligen Rechenmodule einem Raumbereich zuzuordnen. Dies kann unter Umständen bei einer eventuellen Fehlersuche sehr hilfreich sein.

In einer weiteren vorteilhaften Ausführungsform der vorliegenden Erfindung ist vorgesehen, dass die Rechenmodule jeweils eine Schnittstelle für das Kommunizieren mit einer oder mehreren Rechenmodulen aufweisen. In dieser Variante können Rechenmodule auch untereinander Signale austauschen. Somit können bestimmte Kommunikationskanäle zwischen Rechenmodulen geschaffen werden, die es ermöglichen, dass bestimmte Signale oder Parameter direkt zwischen den Rechenmodulen ausgetauscht werden können. So könnte beispielsweise ein Rechenmodul, welches einen temperaturabhängigen Prozess ausführt, mit einem anderen Rechenmodul kommunizieren, welches einen Temperatursensor auslesen kann.

Eine vorteilhafte weitere Variante der vorliegenden Erfindung sieht vor, dass das Rechenmodul über eine Kommunikationsverbindung mit einer Sensoreinheit gekoppelt ist, wobei die Sensoreinheit ausgebildet ist, einen Umgebungsparameter aufzunehmen. Eine solche Sensoreinheit kann zum Beispiel eine Kamera oder ein Temperatursensor sein. Der Temperatursensor kann insbesondere die Temperatur in seiner Umgebung erfassen, die Kameraeinheit kann insbesondere Bilder beziehungsweise Fotos in ihrer Umgebung aufnehmen und abspeichern. Diese Umgebungsparameter können über die Kommunikationsverbindung der Steuereinheit zur Verfügung gestellt werden.

In einer weiteren Ausführungsform der vorliegenden Erfindung ist vorgesehen, dass die Steuereinheit ausgestaltet ist, das Zuteilen der zumindest einen digitalen Ressource in Abhängigkeit von dem Umgebungsparameter vorzunehmen. Wird beispielsweise über die Kameraeinheit festgestellt, dass ein Lastkraftwagen mit einer Lieferung ein Werksgelände betritt, so kann die Steuereinheit jene Rechenmodule, welche die Logistik und den Warenempfang betreffen, mit zusätzlichen digitalen Ressourcen ausstatten. Auch ist es möglich, die Zuteilung der digitalen Ressourcen in Abhängigkeit von einer Temperatur vorzunehmen. Bei einer höheren Temperatur kann die Effektivität von Rechenmodulen herabgesetzt sein, was ein neues Zuteilen der digitalen Ressourcen innerhalb des lokalen, modularen Rechnernetzwerkes nötig macht. Somit kann das erfindungsgemäße Verfahren in Abhängigkeit von einem Umgebungsparameter vorgenommen werden.

In einer weiteren Ausführungsform der vorliegenden Erfindung ist vorgesehen, dass das lokale, modulare Rechnernetzwerk eine zumindest teilweise kabelgebundene Kommunikationsverbindung zu einer weiteren externen Steuereinheit aufweist. Diese externe Steuereinheit kann also außerhalb des lokalen, modularen Rechnernetzwerkes platziert sein. Die externe Steuereinheit kann Teil eines Remotesystems sein, welches oft auch als "Backend-System" bezeichnet wird. Damit ist es möglich, das lokale, modulare Rechnernetzwerk aus der Ferne über die externe Steuereinheit einzurichten beziehungsweise zu steuern. Dieses Remote-System und das lokale, modulare Rechnernetzwerk sind dabei vorzugsweise über ein LAN-Netzwerk oder ein WAN-Netzwerk verbunden. Auch eine Kombination von LANbeziehungsweise WAN-Netzwerken ist möglich, um das Backend-System mit dem lokalen, modularen Rechnernetzwerk zu verbinden.

Die vorliegende Erfindung wird nun anhand der beigefügten Figuren näher erläutert. Dabei zeigen:
- FIG 1: eine Prinzipskizze eines lokalen, modularen Rechnernetzwerkes mit den dazugehörigen Komponenten sowie einer externen Steuereinheit in einem BackendSystem;
- FIG 2: zwei Rechenmodule innerhalb des lokalen, modularen Rechnernetzwerkes mit dazugehörigen digitalen Ressourcen;
- FIG 3: schematische Skizze zur Darstellung der Aktivierung eines Rechenmoduls mit Zugang zu Sensoren und Aktuatoren;
- FIG 4: beispielhafte Skizze eines lokalen, modularen Rechnernetzwerkes mit mobilen Rechenmodulen, welche das Netzwerk verlassen beziehungsweise in es hineintreten.

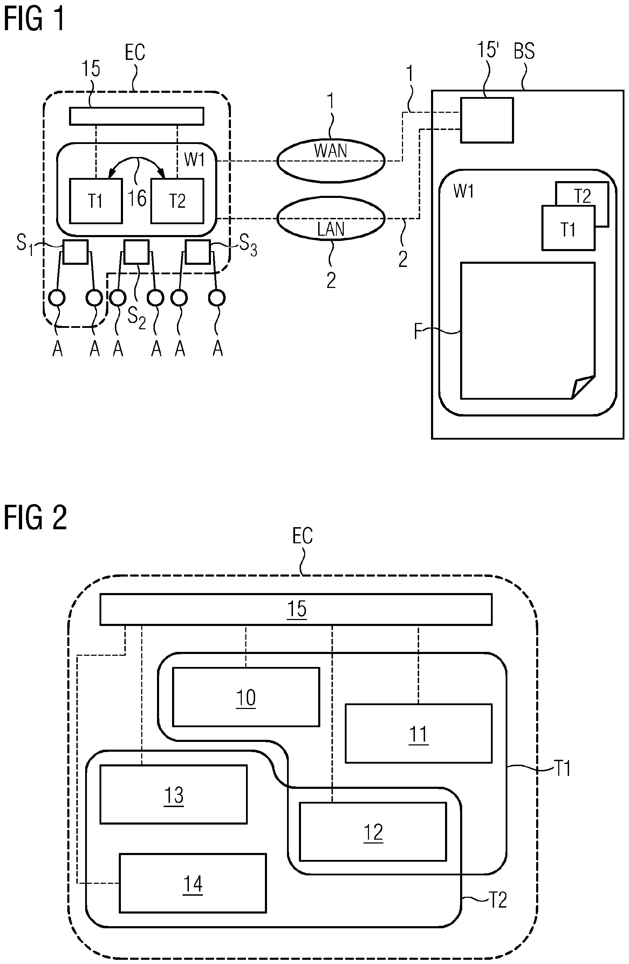

FIG 1 zeigt schematisch ein lokales, modulares Rechnernetzwerk EC, das in einem Arbeitsbereich W1 zwei Rechenmodule T1 und T2 aufweist. In diesem Beispiel besitzt das Rechenmodul T1 eine Kommunikationsverbindung zu dem Sensor S1. Kommunikationsdienste im industriellen Maßstab bedürfen typischerweise einer direkten Verbindung und setzen häufig bestimmte Standards voraus. Vorzugsweise ist die Kommunikationsverbindung über den EtherCAT- oder Profinet-Standard definiert. In diesem Fall bedeutet dies, dass die Rechenmodule T1 beziehungsweise T2 nicht beliebig zum lokalen, modularen Rechnernetzwerk EC angeordnet sein können. Das heißt das lokale, modulare Rechnernetzwerk EC ist häufig in der Nähe der betreffenden Rechenmodule T1 oder T2 angeordnet. In der Regel wird das lokale, modulare Rechnernetzwerk EC in demselben Gebäude angeordnet sein, wie die dazugehörigen Rechenmodule T1 und T2.

Das lokale, modulare Rechnernetzwerk EC ist bisher vor allem durch englische Begriffe bekannt. Häufig wird das lokale, modulare Rechnernetzwerk EC mit dem Begriff "Industrial Edge-Cloud" beziehungsweise "Edge Computing" umschrieben. Der Arbeitsbereich W1 umfasst in diesem Beispiel der FIG 1 die Rechenmodule T1 und T2. Diese Rechenmodule wiederum weisen eine Kommunikationsverbindung zu den zu ihnen zugehörigen Sensoren S1, S2 oder S3 auf. Über diese Kommunikationsverbindungen können die dazugehörigen Aktuatoren A durch die Rechenmodule T1, T2 angesteuert werden.

Der Arbeitsbereich W1 kann räumlich definiert sein oder durch andere Eigenschaften vorgegeben sein. So können beispielsweise jene Rechenmodule zu einem Arbeitsbereich zusammengefasst sein, welche dieselbe Aufgabe erfüllen sollen. Die Rechenmodule T1 und T2 können ihrerseits vorgegebene Funktionen F ausführen beziehungsweise wahrnehmen. Solche Funktionen F können zum Beispiel industrielle Anwendungen, Authentifizierungen, Aufbau einer firmeninternen Kommunikationsverbindung, etc. sein. Sie können in einem vorgegebenen Rahmen bestimmte Signale untereinander austauschen. Anhand einer Authentifizierungsfunktion können sich die Rechenmodule T1 und T2 untereinander erkennen. Die Rechenmodule T1 und T2 können für gewisse Datenverarbeitungen verwendet werden. So ist es möglich, dass von digitalen Ressourcen 10, 11, 14 im Rahmen eines Produktionsleitsystems eingesetzt werden. Ebenso können die Rechenmodule T1 und T2 Aufgaben ausführen, welche ihnen durch eine Steuereinheit 15 oder externe Steuereinheit 15` zugeteilt wurden.

Die Zuteilung der digitalen Ressourcen 10, 11, 14 erfolgt dabei durch die Steuereinheit 15 oder die externe Steuereinheit 15`. Vorzugsweise greift die Steuereinheit 15 auf eine Abbilddatei zu, in der die Verfahrensschritte a) bis d) hinterlegt sind. Dabei können unterschiedliche und komplexe Vergleichs- beziehungsweise Zuteilalgorithmen in der Abbilddatei hinterlegt sein.

Die FIG 1 zeigt zudem ein Fernsteuerungssystem, welches oft auch als Backend-System BS bezeichnet wird. Dieses Backend-System BS ist optional, jedoch kann erwünscht sein, die Konfiguration des lokalen, modularen Rechnernetzwerkes EC durch die weitere externe Steuereinheit 15` vorzunehmen. Die externe Steuereinheit 15` ist innerhalb des Backend-Systems BS angeordnet. In dem Backend-System BS kann der Arbeitsbereich W1 mit den Rechenmodulen T1 und T2 dargestellt werden. Über eine Wide Area Network Verbindung 1 (WAN-Verbindung) beziehungsweise eine LAN-Verbindung 2 kann das Backend-System BS mit dem lokalen, modularen Rechnernetzwerk EC verbunden werden. Diese beiden Verbindungen sind vorzugsweise kabelgebunden. Im Bereich des Backend-Systems BS ist der Arbeitsbereich W1 als virtuelle Arbeitsumgebung anzusehen, der es erlaubt, auf verschiedene Funktionen F der Rechenmodule T1 und T2 zuzugreifen. Der Arbeitsbereich W1 innerhalb des lokalen, modularen Rechnernetzwerkes EC ist dagegen als räumlicher Arbeitsbereich zu verstehen. Die Sensoren und Aktuatoren können über spezifische Schnittstellen mit den dazugehörigen Rechenmodulen T1 und T2 verbunden werden. Normalerweise werden die Rechenmodule T1 und T2 einzeln von der Steuereinheit 15 beziehungsweise der externen Steuereinheit 15` angesteuert. Jedoch kann es vorgesehen sein, dass eine interne Kommunikationsverbindung 16 zwischen den Rechenmodulen T1 und T2 vorgesehen ist. Über diese interne Kommunikationsverbindung 16 kann eine vorgegebene Kommunikation zwischen den beiden Rechenmodulen T1 und T2 stattfinden. Ist dies nicht erwünscht, so kann die interne Kommunikationsverbindung 16 schlichtweg entfallen.

Die Sensoren S1, S2, S3 sowie die dazugehörigen Aktuatoren A sind vorzugsweise in der Nähe der Rechenmodule T1 und T2 angeordnet. Dies ist vor allem bei einer speicherprogrammierten Steuerung (SPS) von großem Vorteil, da hier eine rasche Datenübertragung äußerst wichtig ist. In diesem Fall gilt dieselbe Argumentation für die Steuereinheit 15. Erhält zum Beispiel ein Fertigungsroboter, der als Rechenmodul betrachtet werden kann, viele Steuerungssignale pro Sekunde, so kann eine unzureichende oder zu langsame Datenübertragung zu Fehlern im Produktionsablauf führen. Daher wird eine solche SPS-Steuerung vorzugsweise innerhalb des lokalen, modularen Rechnernetzwerkes EC ausgeführt und nicht über ein externes Rechnernetzwerk, welches zum Beispiel sehr weit entfernt sein kann.

In der FIG 2 ist das lokale, modulare Rechnernetzwerk EC mit den Rechenmodulen T1 und T2 sowie deren digitalen Ressourcen schematisch angedeutet. Das Rechenmodul T1 umfasst in diesem Beispiel eine hohe Rechenleistung 10, eine Speicherkapazität 11 sowie industrielle Computer 12. Dies ist jedoch nicht insofern zu verstehen, dass diese digitalen Ressourcen 10, 11 und die industriellen Computer 12 das Rechenmodul T1 darstellen. Vielmehr soll damit angedeutet werden, dass das Rechenmodul T1 Zugriff auf diese digitalen Ressourcen 10, 11 sowie auf bestimmte industrielle Computer 12 hat.

In der FIG 2 hat das Rechenmodul T2 Zugriff auf weitere digitale Ressourcen. Die industriellen Computer 12 sind in diesem Beispiel ebenfalls dem Rechenmodul T2 zugeordnet. Das heißt die Rechenmodule T1 und T2 teilen sich die industriellen Computer 12 als digitale Ressource. Darüber hinaus sind dem Rechenmodul T2 mobile Rechenmodule 13 sowie Kommunikationsgeräte 14 zugeordnet. Die FIG 2 zeigt somit, dass die digitalen Ressourcen 10, 11, 14 sich in folgende Hauptbestandteile beschreiben lassen: Rechenleistung 10, Speicherkapazität 11 sowie Kommunikationsfähigkeiten 14. Das heißt die digitalen Ressourcen 10, 11, 14 können unterschiedliche Kategorien betreffen. Einige dieser Ressourcen betreffen die Hardware, andere die Kommunikation.

Vorzugsweise sind die jeweiligen Verfahrensschritte in der Abbilddatei hinterlegt. Diese Abbilddatei beinhaltet eine Abstraktionsschicht für die Hardware. Man kann die Abbilddatei auch als Betriebssystem zwischen der Hardware und den bereitgestellten Diensten ansehen. Die Abbilddatei kann daher viele Rechenmodule ansprechen sowie deren digitalen Ressourcen 10, 11, 14 zuteilen. Um diese Aufgabe entsprechend erfüllen zu können, kann die Abbilddatei insbesondere mit Administrationsrechten ausgestattet sein. Dies kann auch einen Fernsteuerungszugriff beziehungsweise Remote-Zugriff auf ein Rechenmodul beinhalten.

Beispielsweise kann eine Kameraeinheit als Rechenmodul T1 angesprochen werden, um eine Authentifizierungsanfrage zu bearbeiten. Daher kann für die Kameraeinheit kurzzeitig eine höhere Rechenleistung 10 beziehungsweise Speicherkapazität vonnöten sein. In diesem Fall kann gemäß den Befehlen, die in der Abbilddatei hinterlegt sind, vorgesehen sein, dass die Kameraeinheit für einen bestimmten Zeitraum zur Erfüllung der Authentifizierungsanfrage temporär mehr Rechenleistung 10 beziehungsweise Speicherkapazität 11 zugewiesen bekommt. Das heißt die in der FIG 2 gezeigte Zuordnungsstruktur würde sich in diesem Fall ändern. Somit ist eine bestimmte Zuordnungsstruktur nicht stationär, sondern kann sich je nach Ressourcenanfrage flexibel ändern. Das Ausführen beziehungsweise bearbeiten der Abbilddatei kann auf einem Betriebssystem beziehungsweise einer anderen virtuellen Umgebung, welche Containertechnologien (englisch: another virtualization including container technologies) unterstützt, erfolgen. Eine mögliche Grundstruktur eines solchen Betriebssystems beziehungsweise virtuellen Umgebung kann insbesondere folgende Aspekte bereitstellen.

Die Abbilddatei muss nicht zwangsläufig in der Nähe des zugehörigen Rechenmoduls T1 oder T2 angefertigt werden. Insbesondere kann die Abbilddatei mit einem benutzerfreundlichen Programm angefertigt beziehungsweise bearbeitet werden. Idealerweise ist dieses benutzerfreundliche Programm vorkonfiguriert und bereits vorinstalliert. Es kann bedarfsweise geändert werden und erstellt bei entsprechender Ausführung idealerweise die Abbilddatei. Um dies zu bewerkstelligen, ist es vorteilhaft wenn die jeweiligen Rechenmodule T1 beziehungsweise T2 abrufbar Informationen über ihre jeweiligen digitalen Ressourcen 10, 11, 14 bereithalten.

Die Abbilddatei ist vorzugsweise unabhängig von der Konfiguration der jeweiligen Rechenmodule T1, T2 beziehungsweise auch unabhängig von dem Arbeitsbereich W1. Ebenfalls vorteilhaft ist es, wenn die Abbilddatei leicht transportierbar ist oder diese über eine Remote-Verbindung aus einem anderen Netzwerk bezogen werden kann. Dieses andere Netzwerk kann auch ein Onlinestore eines Zulieferers sein. Dieser Zulieferer könnte sich auf das Vertreiben von entsprechenden Abbilddateien spezialisiert haben und diese entsprechend zum Verkauf angeboten haben. Das heißt eine Abbilddatei kann über einen Onlinestore gekauft werden und im Anschluss daran durch die Steuereinheit 15 beziehungsweise durch die externe Steuereinheit 15` ausgeführt werden. Damit würde sich die Konfiguration der digitalen Ressourcen 10, 11, 14 innerhalb des lokalen, modularen Rechnernetzwerkes EC ändern.

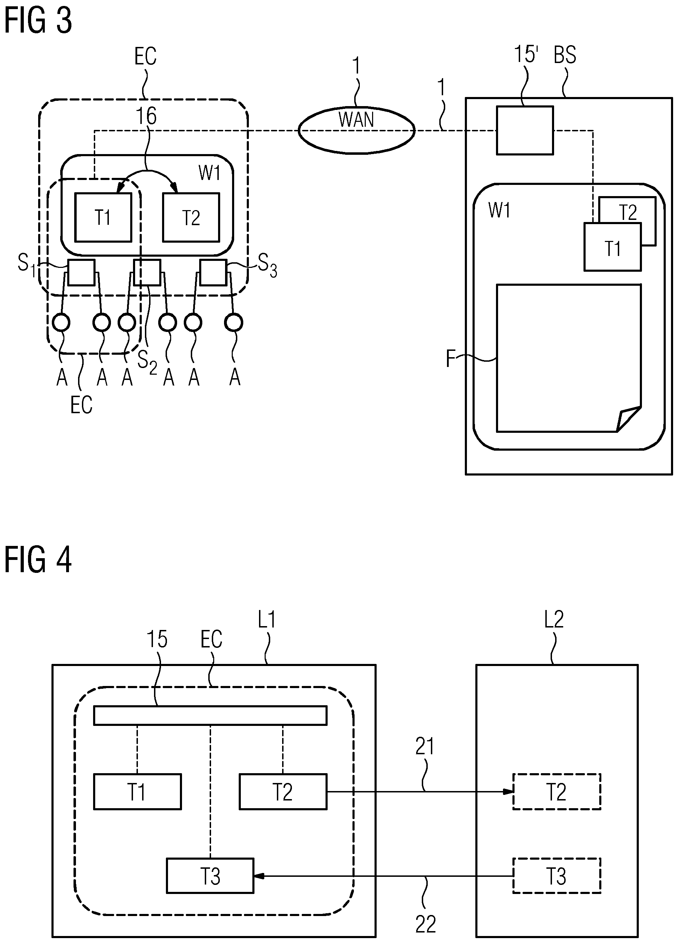

In FIG 3 ist schematisch angedeutet, wie das Rechenmodul T1 durch die Steuereinheit 15` angesprochen wird. In dem Backend-System BS wird das Rechenmodul T1 vorkonfiguriert. Eine Kommunikationsverbindung zwischen dem Backend-System BS und dem lokalen, modularen Rechnernetzwerk EC wird in diesem Beispiel über die WAN-Verbindung 1 hergestellt. Die externe Steuereinheit 15` führt die entsprechende Abbilddatei aus. Dies hat zur Folge, dass das Rechenmodul T1 aktiviert wird und die dazugehörigen Sensoren S1, S2 sowie die entsprechenden Aktuatoren A aktiviert werden. Zugleich werden dem Rechenmodul T1 entsprechende digitale Ressourcen zugewiesen, damit das Rechenmodul T1 eine in der Abbilddatei hinterlegte Anforderung bestimmungsgemäß erfüllen kann. In diesem Beispiel wird durch das Ausführen der Abbilddatei durch die externe Steuereinheit 15` das lokale, modulare Rechnernetzwerk EC hinsichtlich seiner digitalen Ressourcen 10, 11, 14 abgefragt. Durch den in der Abbilddatei integrierten Algorithmus werden die digitalen Ressourcenwerte und die Bedarfswerte einem Vergleich unterzogen. Dieser Vergleich kann mehrere Randbedingungen beinhalten. Anhand des Ergebnisses dieses Vergleichs werden die digitalen Ressourcen 10, 11, 14 durch die externe Steuereinheit 15` neu zugeteilt.

Im Beispiel der FIG 3 erfolgt die Zuteilung der digitalen Ressourcen 10, 11, 14 durch die Steuereinheit 15`. Dies stellt einen Remotezugriff dar. Es ist jedoch auch möglich, dass die Steuereinheit 15, welche Teil des lokalen, modularen Rechnernetzwerkes EC ist, die Zuteilung der digitalen Ressourcen 10, 11, 14 bewirkt. Die Aktivierung der Abbilddatei erfolgt vorzugsweise automatisiert anhand einer vorgefertigten Programmierung. Die Aktivierung der Abbilddatei kann jedoch auch manuell durch einen Mitarbeiter erfolgen. Bedarfsweise kann dabei auch der Inhalt beziehungsweise die Befehle der Abbilddatei angepasst werden. Falls erforderlich, kann die Abbilddatei eine gesicherte Kommunikationsverbindung zu externen Diensten aufbauen. Über diese gesicherte Kommunikationsverbindung könnte beispielsweise über einen Onlinestore ein zusätzliches Programmpaket, welches Teil der Abbilddatei werden soll, bezogen werden. Das Ansprechen beziehungsweise Aktivieren der Rechenmodule T1 und T2 erfolgt vorzugsweise über sogenannte Zugriffspunkte. Über diese Zugriffspunkte beziehungsweise Schnittstellen können Steuersignale der Steuereinheit 15 beziehungsweise externen Steuereinheit 15` in das Betriebssystem der jeweiligen Rechenmodule T1 und T2 gelangen.

Die Steuereinheit 15 beziehungsweise die externe Steuereinheit 15` kann somit auch externe Dienste über eine Remoteverbindung in Anspruch nehmen und innerhalb des lokalen, modularen Netzwerkes EC ausführen. Somit ist es möglich, das lokale, modulare Rechnernetzwerk EC zunächst mit einer minimalen Anzahl von Diensten beziehungsweise Funktionen F zu starten. Kommen weitere Ressourcenanfragen hinzu, so kann die Steuereinheit 15 oder die externe Steuereinheit 15` über die in der Abbilddatei integrierten Befehle die digitalen Ressourcen 10, 11, 14 neu zuteilen. Neben dem Zuteilen der digitalen Ressourcen 10, 11, 14 kann die Steuereinheit 15 beziehungsweise die externe Steuereinheit 15` die digitale Ressourcen 10, 11, 14 von den jeweiligen Rechenmodulen T1, T2 auch wieder abziehen. Das Zuteilen beziehungsweise Abziehen der digitalen Ressourcen 10, 11, 14 kann über ein komplexes Managementservice verwirklicht werden, welches mit entsprechenden Befehlen in der Abbilddatei hinterlegt ist. Die Abbilddatei kann auch als startbares Script, oder als ausführbare Datei (Beispiel Exe-Datei), ausgeführt sein. Bei einem erstmaligen Einsatz könnte die Steuereinheit 15 mittels der startbaren Abbilddatei zunächst die Gesamtstruktur des lokalen, modularen Rechnernetzwerkes EC erfassen sowie die dazugehörigen Rechenmodule T1, T2 und deren digitalen Ressourcen 10, 11, 14. Im weiteren Verlauf ist es eventuell nicht mehr zwingend notwendig, stets das gesamte Rechnernetzwerk EC abzufragen und zu erfassen.

Im Gegensatz zu bisher üblichen Edge-Cloud Lösungen aus der IT-Branche schlägt die vorliegende Erfindung vor, dass die digitalen Ressourcen 10, 11, 14 flexibel neu zugeteilt beziehungsweise angeordnet werden können. Mehrere Rechenmodule T1, T2 und so weiter formen einen heterogenen Pool aus digitalen Ressourcen 10, 11, 14, was als Ressourcenpool bezeichnet werden kann. Da jedes Rechenmodul T1 und T2 und so weiter verschiedene Fähigkeiten aufweisen kann, ist es sehr vorteilhaft, deren digitalen Ressourcen 10, 11, 14 nicht einem starren Korsett zu unterwerfen, sondern je nach Ressourcenanfrage flexibel zuzuteilen.

Der Vorteil dieser vorliegenden Erfindung zeigt sich insbesondere, wenn Rechenmodule T1, T2 oder mobile Rechenmodule 13 betrachtet werden. Mobile Rechenmodule 13 können den Erfassungsbereich des lokalen, modularen Rechnernetzwerkes EC verlassen und in ein neues zweites lokales, modulares Rechnernetzwerk eintreten. Bisher ist kein Ansatz bekannt, wie mobile Rechenmodule 13, welche den Erfassungsbereich des lokalen, modularen Rechnernetzwerkes EC betreten, integriert werden können. Mobile Rechenmodule 13 können beispielsweise selbstfahrende Roboter, Smartphones, Kraftfahrzeuge oder auch Schiffe sein.

In FIG 4 sind zwei unterschiedliche Raumbereiche L1 und L2 gezeigt. Das lokale, modulare Rechnernetzwerk EC beschränkt sich auf den Raumbereich L1. L2 gehört nicht mehr zum Rechnernetzwerk EC. In diesem Beispiel soll der Raumbereich L1 ein Hafen sein. Der Raumbereich L2 stellt beispielsweise einen Güterbahnhof dar. Das Rechenmodul T1 sei in diesem Beispiel ein Kran zum Heben von Schiffscontainern. Das Rechenmodul T2 soll in diesem Beispiel ein Lastkraftwagen mit entsprechender Computersteuerung sein. Das Rechenmodul T3 ist in diesem Beispiel ein Schiff. Befindet sich dieses Schiff auf hoher See, so ist es außerhalb des Raumbereichs L1. Fährt dieses Schiff nun über den Pfad 22 in den Hafen ein, so erreicht es damit den Wirkungsbereich des lokalen, modularen Rechnernetzwerkes EC. In diesem Fall kann die Steuereinheit 15 die digitalen Ressourcen 10, 11, 14 des Schiffs in das lokale, modulare Rechnernetzwerk EC integrieren und aufnehmen. Damit ist es möglich, bei dem Zuteilen der digitalen Ressourcen 10, 11, 14 die neu hinzugekommenen Ressourcen des Schiffes zu berücksichtigen. Ebenso erfasst die Steuereinheit 15, wenn das Schiff den Hafen wieder verlässt. In diesem Fall würde die Steuereinheit 15 registrieren, dass die digitalen Ressourcen des Schiffes nicht mehr zur Verfügung stehen und könnte diesen Umstand bei der Zuteilung der digitalen Ressourcen 10, 11, 14 berücksichtigen. Ebenso kann der Lastkraftwagen über den Pfad 21 den Hafenbereich, in diesem Fall den Raumbereich L1 verlassen. Über den Pfad 21 begibt sich der Lastkraftwagen, in diesem Fall das Rechenmodul T2, in den Raumbereich L2, der nicht mehr Teil des lokalen, modularen Rechnernetzwerkes EC ist. In diesem Beispiel ist der Raumbereich L2 ein Güterbahnhof, der nicht an das lokale, modulare Rechnernetzwerk EC angeschlossen ist. Das heißt die in dem Raumbereich L2 befindlichen Rechenmodule 13 sowie deren digitalen Ressourcen 10, 11, 14 sind nicht mehr Teil des lokalen, modularen Rechnernetzwerkes EC. Verfügt das Schiff beispielsweise über gut ausgestattete Computer 12 beziehungsweise Server und sind noch digitale Ressourcen 10, 11, 14 verfügbar, so können temporär intensive Datenauswertungen mittels der digitalen Ressourcen 10, 11, 14 des Schiffes ausgeführt werden, solange das Schiff sich im Hafen, also im Raumbereich L1 aufhält.

Dies kann dabei helfen, Rechenoperationen schneller und flexibler durchzuführen. Das heißt das lokale, modulare Rechnernetzwerk EC ist im Gegensatz zu den bisher bekannten Lösungen und Ansätzen kein starres Gebilde. Mobile Rechenmodule 13 wie das Schiff können temporär Teil des lokalen, modularen Rechnernetzwerkes EC werden und damit können zusätzliche digitale Ressourcen 10, 11, 14 in das lokale modulare Rechnernetzwerk EC hinzutreten. Würde diese Flexibilität fehlen, so könnten die digitalen Ressourcen 10, 11, 14 des Schiffes nicht genutzt werden. Damit kann vermieden werden, dass sich im Raumbereich L1 Rechenmodule aufhalten, deren digitale Ressourcen ungenutzt bleiben.

Die unterschiedlichen Raumbereiche L1 und L2 können auch beispielsweise unterschiedliche Werkhallen sein. Umfasst ein Rechnernetzwerk lediglich eine Werkhalle und nicht die zweite, so können beispielsweise mobile Roboter das Rechnernetzwerk betreten beziehungsweise verlassen. Somit ermöglicht es die vorliegende Erfindung, dass nicht nur die digitalen Ressourcen 10, 11, 14 genutzt werden, welche von stationären Rechenmodulen T1, T2 etc. bereitgestellt werden, sondern darüber hinaus auch digitale Ressourcen von mobilen Rechenmodulen 13 etc. genutzt werden können.

Damit ist es viel besser möglich, das lokale, modulare Rechnernetzwerk EC auf die entsprechenden Anforderungen zuzuschneiden. Das Hinzufügen beziehungsweise Eingliedern der mobilen Rechenmodule 13 in das lokale, modulare Rechnernetzwerk EC kann dabei über die externe Steuereinheit 15` als Remote-Verbindung erfolgen oder über die Steuereinheit 15 vor Ort erfolgen. Dabei ist es zugleich auch möglich, Umgebungsparameter bei dem Prozess des Zuteilens der digitalen Ressourcen 10, 11, 14 zu berücksichtigen. Soll beispielsweise eine äußerst rechenintensive Aufgabe ausgeführt werden, so kann vorgesehen sein, dass die digitalen Ressourcen 10, 11, 14 nur dann freigegeben werden, wenn zuvor über eine Authentifizierung eine Personenkontrolle stattgefunden hat. Das heißt anhand eines Kamerabildes würde die Identität einer Person überprüft und nur bei entsprechender Übereinstimmung könnten die digitalen Ressourcen 10, 11, 14 freigegeben werden. Das Einbinden beziehungsweise Entlassen von mobilen Rechenmodulen 13 in das lokale, modulare Rechnernetzwerk EC kann vorzugsweise automatisiert ausgestaltet sein. Entsprechende Anweisungen können in der Abbilddatei hinterlegt sein.

In der Abbilddatei können auch Fallunterscheidungen und Regelwerke, die das Zuteilen der digitalen Ressourcen 10, 11, 14 betreffen, hinterlegt sein. So können beispielsweise bestimmte digitale Ressourcen 10, 11, 14 als Notreserve vorgesehen sein, welche nicht ohne Weiteres zugeteilt werden dürfen.

Durch den flexiblen modularen Aufbau des lokalen, modularen Rechnernetzwerkes EC kann dieses Rechnernetzwerk EC leicht angepasst werden. Diese dynamischen Anpassungen können in einer Abbilddatei als Steuerbefehle gespeichert sein. Dabei ist es möglich, Abbilddateien außerhalb des lokalen, modularen Rechnernetzwerkes EC zu beziehen und innerhalb dieses Rechnernetzwerkes EC zum Einsatz zu bringen. Die Steuereinheit 15 beziehungsweise externe Steuereinheit 15` kann dabei auch unter Umstände eine gesicherte Verbindung zu einem Appstore aufbauen, um von diesem eine entsprechende Abbilddatei zu beziehen. Ein weiterer Vorteil dieser vorliegenden Erfindung ist, dass dabei kein spezielles Betriebssystem benötigt wird. Ebenso kann anhand benutzerfreundlicher Texteditoren oder anderer Programme eine Anpassung auch von Nicht-Computerexperten erfolgen. Ist die Abbilddatei zugleich als ausführbare Bootdatei ausgebildet, so kann das lokale, modulare Rechnernetzwerk EC unabhängig von dessen Konfiguration angepasst werden. Somit ermöglicht es die vorliegende Erfindung, digitale Ressourcen 10, 11, 14 innerhalb des lokalen, modularen Rechnernetzwerkes EC flexibler, effektiver sowie zielgerichteter zu verwalten. Insbesondere kann vermieden werden, dass bei mobilen Rechenmodulen 13 digitale Ressourcen 10, 11, 14 ungenutzt bleiben. Dies kann die Effektivität bei intensiven Datenauswertungen erheblich steigern.

## Patentansprüche

1. Verfahren zum Zuteilen von zumindest einer digitalen Ressource (10, 11, 14) eines lokalen, modularen Rechnernetzwerkes (EC), welches wenigstens zwei Rechenmodule (T1, T2) aufweist, denen jeweils ein Ressourcenwert für eine digitale Ressource (10, 11, 14) zugeordnet ist, in Abhängigkeit von einem Eingabedatensatz, der eine Ressourcenanfrage mit einem Bedarfswert aufweist, mittels einer Steuereinheit (15), die folgende Verfahrensschritte ausführt:
a) Zugreifen auf den Eingabedatensatz und Einlesen des Eingabedatensatzes,
b) Abrufen des Ressourcenwerts von jedem Rechenmodul (T1, T2), das Teil des lokalen, modularen Rechnernetzwerkes (EC) ist, wobei der Ressourcenwert einen verfügbaren Anteil der digitalen Ressource (10, 11, 14) des jeweiligen Rechenmoduls (T1, T2) repräsentiert,
c) Vergleichen des Bedarfswerts mit zumindest einem der abgerufenen Ressourcenwert und
d) Zuteilen zumindest einer der digitalen Ressourcen (10, 11, 14) zu der Anfrage in Abhängigkeit von einem Ergebnis des Vergleichens,
**gekennzeichnet durch** die Schritte:
e) automatisches Integrieren eines mobilen Rechenmoduls (13) in das lokale, modulare Rechnernetzwerk (EC), falls das mobile Rechenmodul (13) in einen Raumbereich (L1), der dem lokalen, modularen Rechnernetzwerk (EC) zugeordnet ist, eintritt, und Entlassen des mobilen Rechenmoduls (13), falls das mobile Rechenmodul (13) den Raumbereich (L1) verlässt, und
f) nachdem das mobile Rechenmodul in das lokale, modulare Rechennetzwerkautomatisch integriert oder entlassen wurde, wird das geänderte lokale, modulare Rechnernetzwerk bei der Zuteilung der digitalen Ressourcen berücksichtigt.

2. Verfahren nach Anspruch 1, wobei die einzelnen Verfahrensschritte in einer digitalen Abbilddatei gespeichert sind und das Verfahren nach einer Aktivierung der Abbilddatei durch die Steuereinheit (15) automatisch ausgeführt wird.

3. Verfahren nach Anspruch 2, wobei die Abbilddatei außerhalb des lokalen, modularen, Rechnernetzwerkes (EC) ohne Verwendung der Steuereinheit (15) erstellt wird.

4. Verfahren nach Anspruch 2 oder 3, wobei die erstellte Abbilddatei der Steuereinheit (15) zur Verfügung gestellt wird und das Abbild innerhalb des lokalen, modularen Rechnernetzwerkes (EC) ausgeführt wird.

5. Verfahren nach einem der vorigen Ansprüche, wobei die Rechenmodule (T1, T2) von der Steuereinheit (15) einzeln angesteuert werden und zwischen den Rechenmodulen (T1, T2) keine Signale, welche die verfügbaren Anteile der digitalen Ressourcen (10, 11, 14) betreffen, ausgetauscht werden.

6. Verfahren nach einem der vorigen Ansprüche, wobei die Steuereinheit (15) das Verfahren nach einem bereitgestellten Regelwerk ausführt, welches insbesondere einen Zeitplan für das Ausführen der Verfahrensschritte a) bis d) umfasst.

7. Vorrichtung zur Zuteilung von digitalen Ressourcen (10, 11, 14) eines lokalen, modularen Rechnernetzwerkes, welches wenigstens zwei Rechenmodule (T1, T2) aufweist, denen jeweils ein Ressourcenwert für eine digitale Ressource (10, 11, 14) zugeordnet ist, in Abhängigkeit von einem Eingabedatensatz, der eine Ressourcenanfrage mit einem Bedarfswert aufweist, mit einer Steuereinheit (15), die ausgestaltet ist,
- auf den Eingabedatensatz zuzugreifen und den Eingabedatensatz auszulesen,
- von jedem Rechenmodul (T1, T2), das Teil des lokalen, modularen Rechnernetzwerkes (EC) ist, den Ressourcenwert abzurufen, wobei der Ressourcenwert einen verfügbaren Anteil der digitalen Ressource (10, 11, 14) des jeweiligen Rechenmoduls (T1, T2) repräsentiert,
- den Bedarfswert mit zumindest einem der abgerufenen Ressourcenwerte zu vergleichen und
- zumindest eine der digitalen Ressourcen (10, 11, 14) zu der Anfrage in Abhängigkeit von einem Ergebnis des Vergleichens zuzuteilen,
**dadurch gekennzeichnet, dass**
- die Steuereinheit (15) ausgestaltet ist, ein mobiles Rechenmodul (13) in das lokale, modulare Rechnernetzwerk (EC) automatisch zu integrieren, falls das mobile Rechenmodul (13) in einen Raumbereich (L1), der dem lokalen, modularen Rechnernetzwerk (EC) zugeordnet ist, eintritt, und zu entlassen, falls das mobile Rechenmodul (13) den Raumbereich (L1) verlässt, und, nachdem das mobile Rechenmodul in das lokale, modulare Rechennetzwerk automatisch integriert oder entlassen wurde, das geänderte lokale, modulare Rechnernetzwerk bei der Zuteilung der digitalen Ressourcen zu berücksichtigen.

8. Vorrichtung nach Anspruch 7, wobei die wenigstens zwei Rechenmodule (T1, T2) ein heterogenes Rechnernetzwerk bilden.

9. Vorrichtung nach einem der Ansprüche 7 bis 8, wobei mehrere Rechenmodule (T1, T2) in dem Raumbereich (L1) angeordnet sind, der dem lokalen, modularen Rechnernetzwerk (EC) zugeordnet ist.

10. Vorrichtung nach Anspruch 7 bis 9, wobei die Rechenmodule (T1, T2) jeweils eine Schnittstelle für das Kommunizieren mit einer oder mehreren Rechenmodulen (T1, T2) aufweisen.

11. Vorrichtung nach einem der Ansprüche 7 bis 10, wobei eines der wenigstens zwei Rechenmodule (T1, T2) über eine Kommunikationsverbindung mit einer Sensoreinheit (S1, S2, S3) gekoppelt ist, wobei die Sensoreinheit ausgebildet ist, einen Umgebungsparameter aufzunehmen.

12. Vorrichtung nach Anspruch 11, wobei die Steuereinheit (15) ausgestaltet ist, das Zuteilen der zumindest einen digitalen Ressource (10, 11, 14) in Abhängigkeit von dem Umgebungsparameter vorzunehmen.

13. Vorrichtung nach einem der Ansprüche 7 bis 12, wobei das lokale, modulare Rechnernetzwerk (EC) eine zumindest teilweise kabelgebundene Kommunikationsverbindung zu einer weiteren externen Steuereinheit aufweist.

## Claims

1. Method for allocating at least one digital resource (10, 11, 14) of a local, modular computer network (EC) that has at least two computer modules (T1, T2) to each of which a resource value for a digital resource (10, 11, 14) is assigned, depending on an input dataset that has a resource request having a required value, by way of a control unit (15) that executes the following method steps:
a) accessing the input dataset and reading the input dataset,
b) retrieving the resource value from each computer module (T1, T2) that is part of the local, modular computer network (EC), wherein the resource value represents an available proportion of the digital resource (10, 11, 14) of the respective computer module (T1, T2),
c) comparing the required value with at least one of the retrieved resource values, and
d) allocating at least one of the digital resources (10, 11, 14) to the request depending on a result of the comparison, **characterized by** the steps of:
e) automatically integrating a mobile computer module (13) into the local, modular computer network (EC) if the mobile computer module (13) enters a spatial area (L1) that is assigned to the local, modular computer network (EC), and removing the mobile computer module (13) if the mobile computer module (13) leaves the spatial area (L1), and
f) after the mobile computer module has been automatically integrated into or removed from the local, modular computer network, the amended local, modular computer network is taken into account in the allocation of the digital resources.

2. Method according to Claim 1, wherein the individual method steps are stored in a digital image file and the method is executed automatically following activation of the image file by the control unit (15).

3. Method according to Claim 2, wherein the image file is created outside the local, modular computer network (EC) without using the control unit (15).

4. Method according to Claim 2 or 3, wherein the created image file is made available to the control unit (15) and the image is executed within the local, modular computer network (EC).

5. Method according to one of the preceding claims, wherein the computer modules (T1, T2) are activated individually by the control unit (15) and no signals that relate to the available proportions of the digital resources (10, 11, 14) are exchanged between the computer modules (T1, T2).

6. Method according to one of the preceding claims, wherein the control unit (15) executes the method in accordance with a provided policy that comprises in particular a schedule for executing method steps a) to d).

7. Device for allocating digital resources (10, 11, 14) of a local, modular computer network that has at least two computer modules (T1, T2) to each of which a resource value for a digital resource (10, 11, 14) is assigned, depending on an input dataset that has a resource request having a required value, having a control unit (15) that is designed
- to access the input dataset and to read the input dataset,
- to retrieve the resource value from each computer module (T1, T2) that is part of the local, modular computer network (EC), wherein the resource value represents an available proportion of the digital resource (10, 11, 14) of the respective computer module (T1, T2),
- to compare the required value with at least one of the retrieved resource values and
- to allocate at least one of the digital resources (10, 11, 14) to the request depending on a result of the comparison, **characterized in that**
- the control unit (15) is designed to automatically integrate a mobile computer module (13) into the local, modular computer network (EC) if the mobile computer module (13) enters a spatial area (L1) that is assigned to the local, modular computer network (EC), and to remove it if the mobile computer module (13) leaves the spatial area (L1), and, after the mobile computer module has been automatically integrated into or removed from the local, modular computer network, to take into account the amended local, modular computer network in the allocation of the digital resources.

8. Device according to Claim 7, wherein the at least two computer modules (T1, T2) form a heterogeneous computer network.

9. Device according to either of Claims 7 and 8, wherein a plurality of computer modules (T1, T2) are arranged in the spatial area (L1) that is assigned to the local, modular computer network (EC).

10. Device according to Claims 7 to 9, wherein the computer modules (T1, T2) each have an interface for communicating with one or more computer modules (T1, T2).

11. Device according to one of Claims 7 to 10, wherein one of the at least two computer modules (T1, T2) is coupled to a sensor unit (S1, S2, S3) via a communication connection, wherein the sensor unit is designed to record a surroundings parameter.

12. Device according to Claim 11, wherein the control unit (15) is designed to allocate the at least one digital resource (10, 11, 14) depending on the surroundings parameter.

13. Device according to one of Claims 7 to 12, wherein the local, modular computer network (EC) has an at least partly wired communication connection to a further external control unit.

## Revendications

1. Procédé d'allocation d'au moins une ressource numérique (10, 11, 14) d'un réseau informatique modulaire local (EC), qui comprend au moins deux modules de calcul (T1, T2), auxquels est attribuée respectivement une valeur de ressource pour une ressource numérique (10, 11, 14), en fonction d'un ensemble de données entrées, qui comprend une demande de ressource avec une valeur de besoin, au moyen d'une unité de commande (15), qui exécute les étapes suivantes :
a) accès à l'ensemble de données entrées et lecture de l'ensemble de données entrées,
b) appel de la valeur de ressource par chaque module de calcul (T1, T2), qui fait partie du réseau informatique modulaire local (EC), dans lequel la valeur de ressource représente une part disponible de la ressource numérique (10, 11, 14) du module de calcul (T1, T2) respectif,
c) comparaison de la valeur de besoin avec au moins une des valeurs de ressources enregistrées et
d) allocation d'au moins une des ressources numériques (10, 11, 14) à la demande en fonction d'un résultat de la comparaison,
**caractérisé par** les étapes suivantes :
e) intégration automatique d'un module de calcul mobile (13) dans le réseau informatique modulaire local (EC) dans le cas où le module de calcul mobile (13) entre dans une région de l'espace (L1) qui est attribuée au réseau informatique modulaire local (EC), et renvoi du module de calcul mobile (13) dans le cas où le module de calcul mobile (13) quitte la région de l'espace (L1) et
f) une fois que le module de calcul mobile a été intégré dans le réseau informatique modulaire local (EC) ou a été renvoyé, le réseau informatique modulaire local modifié est pris en compte lors de l'allocation des ressources numériques.

2. Procédé selon la revendication 1, dans lequel les différentes étapes sont enregistrées dans un fichier image numérique et le procédé est exécuté automatiquement par l'unité de commande (15) après une activation du fichier image.

3. Procédé selon la revendication 2, dans lequel le fichier image est créé à l'extérieur du réseau informatique modulaire local (EC) sans utilisation de l'unité de commande (15).

4. Procédé selon la revendication 2 ou 3, dans lequel le fichier image créé est mis à la disposition de l'unité de commande (15) et l'image est exécutée à l'intérieur du réseau informatique modulaire local (EC).

5. Procédé selon l'une des revendications précédentes, dans lequel les modules de calcul (T1, T2) sont contrôlés individuellement par l'unité de commande (15) et, entre les modules de calcul (T1, T2), n'est échangé aucun signal concernant les parts disponibles des ressources numériques (10, 11, 14).

6. Procédé selon l'une des revendications précédentes, dans lequel l'unité de commande (15) exécute le procédé selon un ensemble de règles mis à disposition, qui comprend plus particulièrement un calendrier pour l'exécution des étapes a) à d).

7. Dispositif pour l'allocation de ressources numériques (10, 11, 14) d'un réseau informatique modulaire local, qui comprend au moins deux modules de calcul (T1, T2), auxquels est attribuée respectivement une valeur de ressource pour une ressource numérique (10, 11, 14), en fonction d'un ensemble de données entrées, qui comprend une demande de ressource avec une valeur de besoin, avec une unité de commande (15) qui est conçue
- pour accéder à l'ensemble de données entrées et pour lire l'ensemble de données entrées,
- pour faire appeler la valeur de ressource par chaque module de calcul (T1, T2), qui fait partie du réseau informatique modulaire local (EC), dans lequel la valeur de ressource représente une part disponible de la ressource numérique (10, 11, 14) du module de calcul (T1, T2) respectif,
- pour comparer la valeur de besoin avec au moins une des valeurs de ressources appelées et
- pour allouer au moins une des ressources numériques (10, 11, 14) à la demande en fonction d'un résultat de la comparaison,
**caractérisé en ce que**
- l'unité de commande (15) est conçue pour intégrer automatiquement un module de calcul mobile (13) dans le réseau informatique modulaire local (EC) dans le cas où le module de calcul mobile (13) entre dans une région de l'espace (L1) qui est attribuée au réseau informatique modulaire local (EC) et pour le renvoyer dans le cas où le module de calcul mobile (13) quitte la région de l'espace (L1) et, une fois que le module de calcul mobile a été intégré automatiquement dans le réseau informatique modulaire local ou renvoyé de celui-ci, le réseau informatique modulaire local, pour prendre en compte le réseau informatique modulaire local modifié lors de l'allocation des ressources numériques.

8. Dispositif selon la revendication 7, dans lequel les au moins deux modules de calcul (T1, T2) constituent un réseau informatique hétérogène.

9. Dispositif selon l'une des revendications 7 à 8, dans lequel plusieurs modules de calcul (T1, T2) sont disposés dans la région de l'espace (L1) qui est attribuée au réseau informatique modulaire local (EC).

10. Dispositif selon la revendication 7 à 9, dans lequel les modules de calcul (T1, T2) comprennent chacun une interface pour la communication avec un ou plusieurs modules de calcul (T1, T2).

11. Dispositif selon l'une des revendications 7 à 10, dans lequel un des au moins deux modules de calcul (T1, T2) est couplé par l'intermédiaire d'une liaison de communication avec une unité de capteur (S1, S2, S3), dans lequel l'unité de capteur est conçue pour enregistrer un paramètre environnemental.

12. Dispositif selon la revendication 11, dans lequel l'unité de commande (15) est conçue pour effectuer l'allocation de l'au moins une ressource numérique (10, 11, 14) en fonction du paramètre environnemental.

13. Dispositif selon l'une des revendications 7 à 12, dans lequel le réseau informatique modulaire local (EC) comprend une liaison de communication au moins partiellement filaire avec une autre unité de commande externe.
